# EUROPÄISCHE PATENTSCHRIFT

(11) **EP 4 129 812 B1**
(45) Veröffentlichungstag und Bekanntmachung des Hinweises auf die Patenterteilung: **07.01.2026**
(21) Anmeldenummer: 21189199.9
(22) Anmeldetag: 02.08.2021
(51) Int. Cl.: B62M 1/12, B62K 19/30, B62M 1/16

(54) **FAHRRAD**
BICYCLE
BICYCLETTE

(43) Veröffentlichungstag der Anmeldung: 08.02.2023
(73) Patentinhaber: Goi.tec e.U., 5201 Seekirchen (AT)
(72) Erfinder: Goiginger, Josef, 5201 Seekirchen (AT)
(74) Vertreter: KLIMENT & HENHAPEL

(56) Entgegenhaltungen:
- WO-A1-00/56595
- CN-U- 202 080 410
- CN-Y- 2 545 081
- KR-B1- 101 193 257
- US-A- 5 082 302
- US-A- 5 810 379
- US-A1- 2002 113 402

## Beschreibung

Die Erfindung betrifft ein Fahrrad umfassend
- eine Rahmenstruktur,
- zumindest ein an der Rahmenstruktur drehbar gelagertes Vorderrad,
- zumindest ein an der Rahmenstruktur drehbar gelagertes Hinterrad,
- ein mit dem zumindest einen Hinterrad kräfteübertragend verbundenes Antriebsmittel,
- eine erste Antriebseinheit zum Antrieb des Antriebsmittels umfassend eine erste drehbar an der Rahmenstruktur gelagerte Kurbelanordnung,
- eine zweite Antriebseinheit umfassend eine zweite Kurbelanordnung,

wobei die zweite Antriebseinheit mit der ersten Antriebseinheit gekoppelt ist,
wobei die erste Antriebseinheit eine erste Freilaufkupplung umfasst, wobei die Kopplung der zweiten Antriebseinheit mit der ersten Antriebseinheit mittels der ersten Freilaufkupplung erfolgt.

### STAND DER TECHNIK

Gattungsgemäße Fahrräder sind grundsätzlich bekannt. Sie dienen dem Zweck, beim Fahren mit dem Fahrrad nicht nur die gesamte Antriebskraft über eine erste Kurbelanordnung mittels einer Beinkraft eines Benutzers auf ein Antriebsmittel, wie beispielsweise eine Kette, zu übertragen, sondern auch eine zusätzliche Antriebskraft über eine zweite Kurbelanordnung mittels einer Armkraft des Benutzers auszunützen, wodurch mitunter nicht nur höhere Geschwindigkeiten erreicht werden, sondern auch dem Benutzer ein Training des ganzen Körpers, d.h. sowohl der Beinmuskulatur als auch der Oberkörpermuskulatur, ermöglicht wird.

Üblicherweise weisen gattungsgemäße Fahrräder eine Rahmenstruktur umfassend
- ein Sattelrohr zur Aufnahme einer Sattelstütze, welche einen Fahrradsattel trägt,
- ein Steuerrohr einerseits zur Aufnahme eines Lenkervorbaus, welcher die Lenkstange trägt, und andererseits zur Aufnahme einer Fahrradgabel sowie
- ein Oberrohr und ein Unterrohr, welche das Sattelrohr und das Steuerrohr miteinander verbinden,
auf. Zusätzlich zur Rahmenstruktur umfassen gattungsgemäße Fahrräder normalerweise ein Vorderrad und ein Hinterrad. Es ist jedoch auch nicht ausgeschlossen, dass diese zwei oder mehrere Vorderräder und/oder zwei oder mehrere Hinterräder aufweisen.

Nachteilig bei den bekannten Fahrrädern ist, dass der konstruktive Aufbau mitunter sehr komplex und wartungsintensiv ist. Des Weiteren kann sich ein gleichzeitig zum Handantrieb stattfindender Lenkvorgang schwierig gestalten, da die zweite Kurbelanordnung bei Antrieb der ersten Kurbelanordnung zwingend mitangetrieben wird, sodass die bekannten Fahrräder, insbesondere bei schlechten bzw. schwierigen Straßenverhältnissen, ein Sicherheitsrisiko darstellen.

CN 2 545 081 Y offenbart ein gattungsgemäßes Zweipersonenfahrrad umfassend einen auf einer hinteren Achse angeordneten Ratschenkern samt Ratschenhülse und einen auf einer vorgelagerten Achse angeordneten Ratschenkern samt Ratschenhülse.

### AUFGABE DER ERFINDUNG

Es ist daher eine Aufgabe der vorliegenden Erfindung, ein Fahrrad zur Verfügung zu stellen, das die Nachteile des Stands der Technik überwindet, wobei insbesondere ein sicheres Fahren und Lenken - unabhängig von den Straßenverhältnissen - mittels des Fahrrads bei gleichzeitig konstruktiv einfachem Aufbau des Fahrrads möglich sein soll.

### DARSTELLUNG DER ERFINDUNG

Diese Aufgabe wird bei einem Fahrrad umfassend
- eine Rahmenstruktur,
- zumindest ein an der Rahmenstruktur drehbar gelagertes Vorderrad,
- zumindest ein an der Rahmenstruktur drehbar gelagertes Hinterrad,
- ein mit dem zumindest einen Hinterrad kräfteübertragend verbundenes Antriebsmittel,
- eine erste Antriebseinheit zum Antrieb des Antriebsmittels umfassend eine erste drehbar an der Rahmenstruktur gelagerte Kurbelanordnung,
- eine zweite Antriebseinheit umfassend eine zweite Kurbelanordnung,

wobei die zweite Antriebseinheit mit der ersten Antriebseinheit gekoppelt ist,
wobei die erste Antriebseinheit eine erste Freilaufkupplung umfasst, wobei die Kopplung der zweiten Antriebseinheit mit der ersten Antriebseinheit mittels der ersten Freilaufkupplung erfolgt,
erfindungsgemäß dadurch gelöst, dass die zweite Antriebseinheit eine zweite Freilaufkupplung umfasst, um eine Kurbelbewegung der Kurbelanordnung nur in eine Richtung zu ermöglichen.

Das erfindungsgemäße Fahrrad weist also zwei Antriebseinheiten auf, wobei die erste Antriebseinheit mit den Beinen eines Benutzers und die zweite Antriebseinheit mit den Armen des Benutzers angetrieben werden kann.

Neben der aus dem Stand der Technik bekannten und üblicherweise in einer Nabe des Hinterrads angeordneten Freilaufkupplung umfasst das erfindungsgemäße Fahrrad zwei weitere Freilaufkupplungen, nämlich die erste Freilaufkupplung und die zweite Freilaufkupplung.

Die erste Freilaufkupplung ist Teil der ersten Antriebseinheit und dient dazu, eine Kraftübertragung zwischen der ersten Antriebseinheit und der zweiten Antriebseinheit selbsttätig zu unterbrechen bzw. zu lösen, wenn die Drehzahl der ersten Antriebseinheit größer ist als die Drehzahl der zweiten Antriebseinheit - d.h. die kräfteübertragende Verbindung zwischen erster und zweiter Antriebseinheit wird gelöst, wenn die zweite Antriebseinheit langsamer angetrieben wird als die erste Antriebseinheit oder überhaupt angehalten wird. Dies hat zu Folge, dass bei Unterbrechung der kräfteübertragenden Verbindung zwischen erster und zweiter Antriebseinheit die zweite Kurbelanordnung im Wesentlichen stillsteht, natürlich unter der Voraussetzung, dass der Benutzer des erfindungsgemäßen Fahrrads diese nicht mittels seiner Arme antreibt. Selbstverständlich ist nicht ausgeschlossen, dass - bspw. aufgrund von Reibung - trotz gelöster kräfteübertragender Verbindung zwischen der ersten Antriebseinheit und der zweiten Antriebseinheit eine (geringe) Kraft von der ersten Antriebseinheit auf die zweite Antriebseinheit übertragen wird.

Beispielsweise kann es sich bei der ersten Freilaufkupplung um eine Sperrklinken-Freilaufkupplung handeln, bei welcher sich Sperrklinken in einer Verzahnung einer Hülse verhaken, wenn die zweite Antriebseinheit zumindest gleichschnell angetrieben wird wie die erste Antriebseinheit. Wird die zweite Antriebseinheit langsamer als die erste Antriebseinheit oder gar nicht angetrieben, dann "schleifen" die Sperrklinken über die Verzahnung der Hülse und die kräfteübertragende Verbindung zwischen erster und zweiter Antriebseinheit ist gelöst.

Die zweite Freilaufkupplung ist Teil der zweiten Antriebseinheit und dient dazu, eine Drehbewegung bzw. Kurbelbewegung der zweiten Kurbelanordnung lediglich in eine Richtung, die sogenannte Drehrichtung, zuzulassen. Dadurch ist es nicht möglich die zweite Kurbelanordnung entgegen dieser Drehrichtung zu bewegen, da die zweite Freilaufkupplung sperrt. D.h. die zweite Freilaufkupplung umfasst eine Rücklaufsperre, insbesondere besteht die zweite Freilaufkupplung aus einer Rücklaufsperre. Aufgrund der zweiten Freilaufkupplung ist es für einen Benutzer des erfindungsgemäßen Fahrrads möglich durch Zug, insbesondere leichten Zug, an der zweiten Kurbelanordnung gegen deren Drehrichtung diese zu stabilisieren und zu fixieren.

Beispielsweise kann es sich bei der zweiten Freilaufkupplung um eine Rücklaufsperre mit Klemmkörperkupplung handeln.

Aufgrund des synergistischen Effekts der ersten Freilaufkupplung und der zweiten Freilaufkupplung ist es also möglich, das erfindungsgemäße Fahrrad unabhängig von den Straßenverhältnissen sicher zu lenken, da die Kurbelbewegung bzw. die Drehbewegung der zweiten Kurbelanordnung der zweiten Antriebseinheit - unabhängig von der Kurbelbewegung der ersten Kurbelanordnung der ersten Antriebseinheit - jederzeit unterbrochen werden kann und die beiden Handkurbeln stabilisiert und fixiert werden können, wodurch der Benutzer des erfindungsgemäßen Fahrrads sichere und präzise Lenkbewegungen einleiten und durchführen kann.

Die von den Beinen und den Armen eines Benutzers des erfindungsgemäßen Fahrrads ausgeübten Antriebskräfte fließen über nur ein Antriebsmittel zum zumindest einen Hinterrad. Dies ist vorteilhaft, da das erfindungsgemäße Fahrrad - trotz zweier Antriebseinheiten - mit lediglich einer Gangschaltung ausgestattet werden kann, wodurch die Anzahl an wartungsintensiven Komponenten niedrig gehalten werden kann.

Bei der ersten Kurbelanordnung kann es sich um eine Tretkurbelanordnung umfassend eine Tretlagerwelle und zwei an den Enden der Tretlagerwelle angebrachte Tretkurbeln samt Pedalen handeln.

Um das erfindungsgemäße Fahrrad sicher und einfach rückwärts, d.h. entgegen einer (potentiellen) Fahrrichtung, bewegen zu können, ist erfindungsgemäß vorgesehen, dass das Fahrrad eine Kupplungseinheit aufweist, um die erste Antriebseinheit wahlweise von der zweiten Antriebseinheit zu lösen. Im gelösten Zustand der beiden Antriebseinheiten wird zwischen der ersten Antriebseinheit und der zweiten Antriebseinheit keine Drehbewegung übertragen. D.h. die beiden Antriebseinheiten sind dank der Kupplungseinheit, welche eine Kupplung umfasst, vollständig entkoppelbar. Im entkoppelten Zustand lässt sich das erfindungsgemäße Fahrrad rückwärts bewegen, ohne dass dies Auswirkungen auf die zweite Antriebseinheit hätte. Somit wird bei der Rückwärtsbewegung lediglich die erste Antriebseinheit, insbesondere die (Tret- )Kurbelanordnung, bewegt.

Bei geschlossener Kupplung der Kupplungseinheit lässt sich das erfindungsgemäße Fahrrad gar nicht oder nur sehr schwer rückwärts bewegen, da die zweite Antriebseinheit, insbesondere die zweite Freilaufkupplung, diese Bewegung sperrt.

Um die Kupplungseinheit, insbesondere die Kupplung, vor Verschmutzung und Beschädigung zu schützen, ist in einer weiteren Ausführungsvariante der Erfindung vorgesehen, dass die Kupplungseinheit, insbesondere die Kupplung, zumindest abschnittsweise innerhalb eines Unterrohrs der Rahmenstruktur angeordnet ist. D.h. die Kupplungseinheit wird zumindest abschnittsweise vom Unterrohr geschützt.

In einer weiteren Ausführungsvariante der Erfindung ist vorgesehen, dass die Kupplungseinheit ein Betätigungselement umfasst, mittels welches Betätigungselements die erste Antriebseinheit wahlweise von der zweiten Antriebseinheit lösbar ist. D.h. mittels des Betätigungselements ist die Kupplung betätigbar.

Es ist vorstellbar, dass das Betätigungselement am Unterrohr angeordnet ist, um dieses mit einem Fuß betätigen zu können und dadurch die Kupplung zu lösen oder zu schließen. Dies ist vorteilhaft, da dadurch die Länge des Seilzugs, welcher die Kupplung und das Betätigungselement verbindet, zumindest minimiert werden kann, wodurch die Kupplungseinheit besonders wartungsarm ist.

Es ist auch vorstellbar, dass das Betätigungselement an einer Lenkstange des erfindungsgemäßen Fahrrads angeordnet ist, um dieses mit einer Hand betätigen zu können und dadurch die Kupplung zu lösen oder zu schließen. Dies ist vorteilhaft, da dadurch der Benutzer die Kupplungseinheit besonders einfach - sogar während die erste Antriebseinheit angetrieben wird - betätigen kann.

Damit der Benutzer die zweite Antriebseinheit mittels seiner Arme ergonomisch und einfach antreiben kann, ist in einer weiteren Ausführungsvariante der Erfindung vorgesehen, dass die zweite Kurbelanordnung zwei Handkurbeln umfasst, welche Handkurbeln an einer Lenkstange angeordnet sind, wobei die Lenkstange drehbar an der Rahmenstruktur gelagert ist. Vorzugsweise ist jeweils eine der zwei Handkurbeln an jeweils einem Ende der Lenkstange angeordnet.

Das erfindungsgemäße Fahrrad soll trotz zweier Antriebseinheiten einen konstruktiv einfachen und vor allem wartungsarmen Aufbau aufweisen. Deshalb ist in einer weiteren Ausführungsvariante der Erfindung vorgesehen, dass die zweite Antriebseinheit einen Antriebsstrang umfasst, welcher Antriebsstrang einerseits kräfteübertragend mit der zweiten Kurbelanordnung verbunden ist und andererseits kräfteübertragend mit der ersten Kurbelanordnung verbunden ist,
wobei der Antriebsstrang
- zumindest abschnittsweise innerhalb einer Lenkstange, vorzugsweise innerhalb der Lenkstange, an welcher die Handkurbeln angeordnet sind,
- zumindest abschnittsweise innerhalb eines Steuerrohrs der Rahmenstruktur und
- zumindest abschnittsweise innerhalb eines Unterrohrs der Rahmenstruktur verlaufend angeordnet ist.

Der Antriebsstrang dient also der Übertragung der Kraft von der zweiten Kurbelanordnung auf die erste Kurbelanordnung und in weitere Folge auf das Antriebsmittel.

Durch die zumindest abschnittsweise Anordnung des Antriebsstrangs innerhalb der Rahmenstruktur wird der Antriebsstrang, insbesondere die drehende Teile des Antriebsstrangs, zumindest abschnittsweise abgedeckt, wodurch dieser an den entsprechenden innerhalb der Rahmenstruktur angeordneten Stellen vor Verschmutzung und vor Beschädigung geschützt ist.

Um den Antriebsstrang optimal vor Verschmutzung und vor Beschädigung zu schützen, ist in einer weiteren Ausführungsvariante vorgesehen, dass der Antriebsstrang
- eine erste innerhalb der Lenkstange drehbar gelagerte Antriebswelle,
- eine zweite innerhalb des Steuerrohrs der Rahmenstruktur drehbar gelagerte Antriebswelle und
- eine dritte innerhalb des Unterrohrs der Rahmenstruktur drehbar gelagerte Antriebswelle
   umfasst,
   wobei
- die erste Antriebswelle, insbesondere über die zweite Freilaufkupplung, mit der zweiten Kurbelanordnung kräfteübertragend verbunden ist,
- die erste Antriebswelle mittels eines ersten Kegelradpaares mit der zweiten Antriebswelle kräfteübertragend verbunden ist,
- die zweite Antriebswelle mittels eines zweiten Kegelradpaares mit der dritten Antriebswelle kräfteübertragend verbunden ist und
- die dritte Antriebswelle mit einer Kupplung der Kupplungseinheit kräfteübertragend verbunden ist.

Somit ist sowohl die erste als auch die zweite und die dritte Antriebswelle innerhalb der Lenkstange bzw. innerhalb Rahmenstruktur angeordnet, wodurch das Wartungsintervall der zweiten Antriebseinheit auf ein Maximum verlängert werden kann.

Die zweite Freilaufkupplung ist ebenfalls innerhalb der Lenkstange angeordnet und dadurch vor Verschmutzung und Beschädigung geschützt.

Sowohl die Verbindung zwischen der ersten und der zweiten Antriebswelle als auch die Verbindung zwischen der zweiten und der dritten Antriebswelle kann jeweils mittels eines Kegelradpaares realisiert werden. Allgemein zeichnen sich Kegelradpaare durch eine kompakte Bauweise, durch eine wirtschaftliche Herstellbarkeit sowie durch eine gute winklige Übertragung von Bewegungen und Kräften aus, wodurch sie sich optimal für den Einsatz innerhalb der Lenkstange bzw. innerhalb der Rahmenstruktur eignen.

Es ist vorstellbar, dass die erste Antriebseinheit ein weiteres Kegelradpaar umfasst, um die Drehbewegung des Antriebsstrangs auf die erste Kurbelanordnung zu übertragen.

Mittels der Kegelradpaare kann eine Übersetzung eingestellt werden. Es ist vorstellbar, dass das Übersetzungsverhältnis zwischen der ersten Kurbelanordnung und der zweiten Kurbelanordnung 2:1, bevorzugt 1,5:1, besonders bevorzugt 1:1, beträgt.

Um trotz geschlossener Kupplungseinheit, d.h. trotz der kräfteübertragenden Verbindung zwischen der ersten und der zweiten Antriebseinheit, optimal Lenken zu können, ist in einer weiteren Ausführungsvariante der Erfindung vorgesehen, dass das Fahrrad ein Zusatzbremssystem umfasst, welches Zusatzbremssystem auf eine Bewegung der zweiten Antriebseinheit, insbesondere der zweiten Kurbelanordnung, wirkt.

Des Weiteren ist hierbei vorteilhaft, dass das Zusatzbremssystem ein Aufsteigen auf das erfindungsgemäße Fahrrad sowie ein Anfahren des erfindungsgemäßen Fahrrads erleichtert, da die zweite Kurbelanordnung fixiert ist, wodurch ein (versehentliches) Antreiben der zweiten Kurbelanordnung verhindert wird.

Beim Zusatzbremssystem handelt es sich um ein weiteres Bremssystem, zusätzlich zum konventionellen Bremssystem eines jeden Fahrrads.

Mittels des Zusatzbremssystems kann die zweite Antriebseinheit, insbesondere die zweite Kurbelanordnung, fixiert werden. D.h. eine Drehbewegung der zweiten Antriebseinheit, insbesondere der zweiten Kurbelanordnung, wird dadurch zumindest auf ein Minimum reduziert, wodurch die Kurbelanordnung im Wesentlichen nicht mehr bewegbar ist. Deshalb ist in einer weiteren Ausführungsvariante der Erfindung vorgesehen, dass das Zusatzbremssystem abschnittsweise innerhalb der Lenkstange angeordnet ist und auf die Drehbewegung der ersten Antriebswelle wirkt, um in einer Bremsposition die zweite Kurbelanordnung zu fixieren.

In einer weiteren Ausführungsvariante der Erfindung ist vorgesehen, dass es sich beim Zusatzbremssystem um ein Scheibenbremssystem handelt, welches eine fest mit der ersten Antriebswelle verbundene Bremsscheibe und einen Bremsträger, an dem der Bremssattel befestigt ist, umfasst. Im die Bremsscheibe umgreifenden Bremssattel befinden sich die Bremsbeläge.

Das Scheibenbremssystem zeichnet sich durch eine hohe thermische Belastbarkeit, durch eine geringe Empfindlichkeit gegenüber Reibwertschwankungen der Bremsbeläge, durch gleichmäßiges Ansprechen, durch einen gleichmäßigen Bremsbelagverschleiß sowie durch eine selbsttätige Nachstellung aus.

Um das Zusatzbremssystem entsprechend einfach und zuverlässig betätigen zu können, ist in einer weiteren Ausführungsvariante der Erfindung vorgesehen, dass das Zusatzbremssystem zumindest einen Bremshebel samt Arretierungselement umfasst, wobei das Arretierungselement eingerichtet ist, um den zumindest einen Bremshebel in einer Bremsposition lösbar zu fixieren. Das Arretierungselement stellt also sicher, dass der zumindest eine Bremshebel vom Benutzer beim Bremsen nicht permanent gedrückt gehalten werden muss. Mittels des Arretierungselements ist es nämlich möglich, den zumindest einen Bremshebel zu Beginn des Bremsvorgangs in der Bremsposition zu fixieren, sodass dieser erst wieder am Ende des Bremsvorgangs gelöst werden muss und während des Bremsvorgangs beide Hände des Benutzers frei sind.

Es ist vorstellbar, dass der zumindest eine Bremshebel samt Arretierungselement an der Lenkstange oder an einer der zwei Handkurbeln angebracht ist.

In einer weiteren Ausführungsvariante der Erfindung ist vorgesehen, dass das Antriebsmittel eine Kette und/oder einen Riemen und/oder eine Kardanwelle umfasst.

Eine Kette zeichnet sich im Vergleich zu einem Riemen oder einer Kardanwelle durch einen sehr guten Wirkungsgrad aus - d.h. das Drehmoment von der ersten Antriebseinheit und ggf. von der zweiten Antriebseinheit wird optimal an das zumindest eine Hinterrad übertragen. Ein Riemen hat - verglichen mit der Kette und der Kardanwelle - wiederum eine deutliche längere Haltbarkeit. Im Schnitt kann ein Riemen, verglichen mit einer Kette, zwei bis drei Mal so lange verwendet werden. Des Weiteren müssen beim Riementausch keine Kettenblätter oder Zahnkränze ausgewechselt werden - dies ist beim Kettentausch zwingend notwendig. Die Vorteile einer Kardanwelle liegen hingegen in deren Wartungsarmut und Zuverlässigkeit. Sowohl Kette als auch Riemen können nämlich während der Fahrt abreißen oder abspringen, wodurch mitunter böse Stürze entstehen können.

Um das erfindungsgemäße Fahrrad für alle Generationen unabhängig von deren körperlichem Zustand, insbesondere von deren Kondition, nutzbar zu machen, ist in einer weiteren Ausführungsvariante der Erfindung vorgesehen, dass das Antriebsmittel zusätzlich einen Motor zum Antrieb des zumindest einen Hinterrads umfasst. Selbstverständlich kann das erfindungsgemäße Fahrrad in dieser Ausführungsvariante des Weiteren eine Antriebsbatterie, eine Steuerelektronik für den Motor sowie einen Sensor für die Kurbelbewegungserkennung aufweisen.

Der Motor bietet mehr Flexibilität und Unabhängigkeit für den Benutzer und ermöglicht diesem das Befahren von vielfältigeren, längeren und/oder steileren Strecken.

In einer weiteren Ausführungsvariante der Erfindung ist vorgesehen, dass die erste Freilaufkupplung zumindest abschnittsweise innerhalb eines Unterrohrs der Rahmenstruktur angeordnet ist, wodurch die erste Freilaufkupplung zumindest abschnittsweise vom Unterrohr der Rahmenstruktur gegenüber Verschmutzung und Beschädigung geschützt ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische axonometrische Darstellung eines erfindungsgemäßen Fahrrads mit einer ersten Kurbelanordnung und einer zweiten Kurbelanordnung in einer ersten Position;
- Fig. 2: eine schematische axonometrische Darstellung des erfindungsgemäßen Fahrrads mit der ersten Kurbelanordnung und der zweiten Kurbelanordnung in einer zweiten Position;
- Fig. 3: eine schematische axonometrische Darstellung des erfindungsgemäßen Fahrrads mit der ersten Kurbelanordnung und der zweiten Kurbelanordnung in einer dritten Position;
- Fig. 4: eine schematische seitliche Schnittdarstellung des erfindungsgemäßen Fahrrads;
- Fig. 5: eine geschnittene Detailansicht einer Lenkstange und eines Teils der zweiten Kurbelanordnung des erfindungsgemäßen Fahrrads in schematischer Darstellung;
- Fig. 6: eine geschnittene Detailansicht eines Steuerrohrs und eines Teils eines Unterrohrs einer Rahmenstruktur des erfindungsgemäßen Fahrrads in schematischer Darstellung;
- Fig. 7: eine geschnittene Detailansicht eines anderen Teils des Unterrohrs der Rahmenstruktur und einer ersten Kurbelanordnung in schematischer Darstellung;
- Fig. 8: eine geschnittene Detailansicht einer abschnittsweise im Unterrohr der Rahmenstruktur angeordneten Kupplungseinheit des erfindungsgemäßen Fahrrads in schematischer Darstellung.

### WEGE ZUR AUSFÜHRUNG DER ERFINDUNG

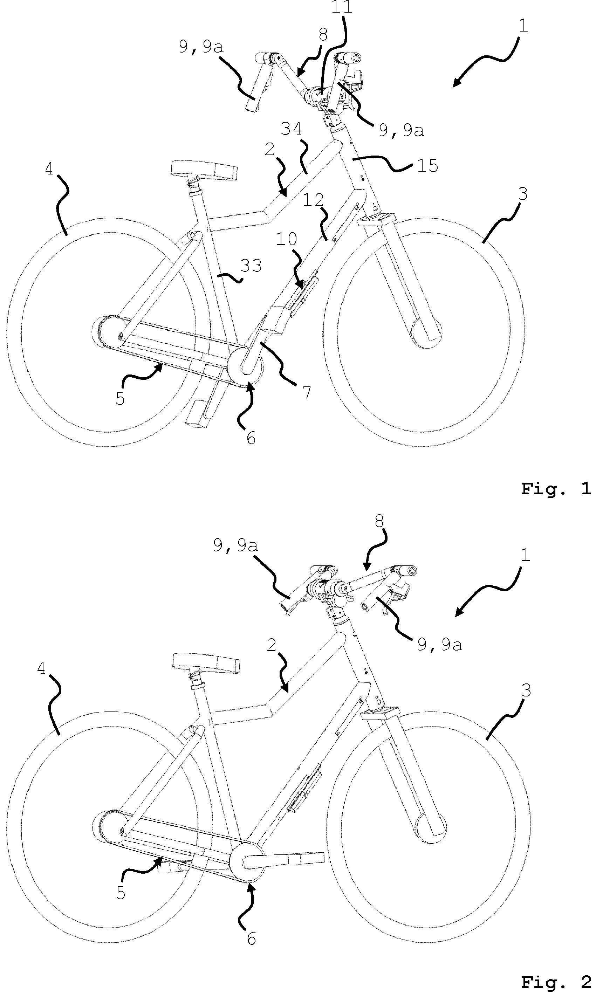

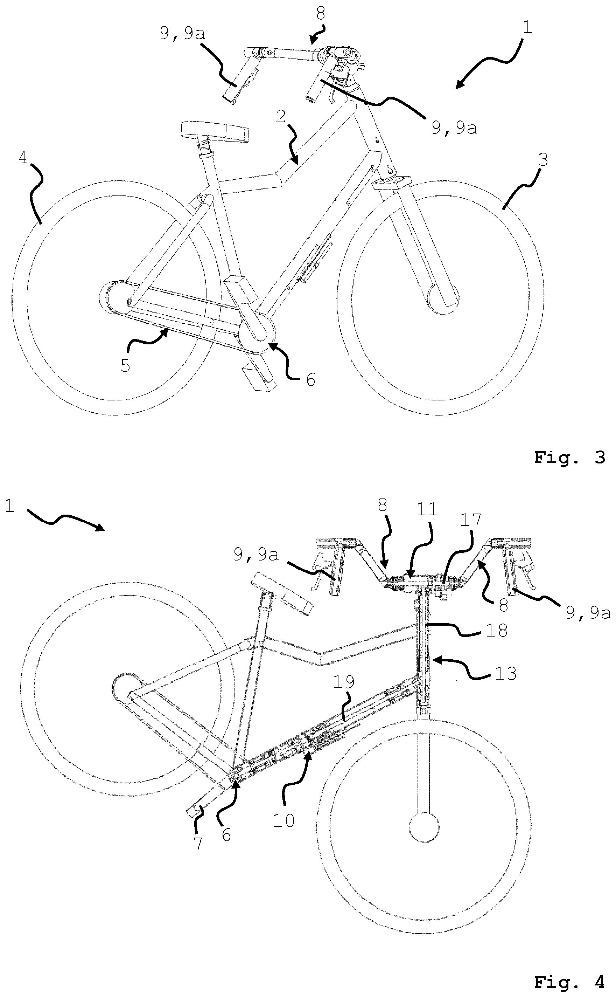

Fig. 1 - Fig. 3 zeigen jeweils eine schematische axonometrische Darstellung eines erfindungsgemäßen Fahrrads 1 mit einer ersten Kurbelanordnung 7 und einer zweiten Kurbelanordnung 9, wobei sich die Kurbelanordnungen 7,9 in jeder der Figuren 1 - 3 in einer anderen Position befinden. In Fig. 1 ist eine erste Position sichtbar, während in Fig. 2 eine zweite Position und in Fig. 3 eine dritte Position dargestellt ist, wobei die Kurbelanordnungen 7,9, um von der ersten Position zur dritten Position zu gelangen, jeweils im Uhrzeigersinn gedreht werden müssen.

Das erfindungsgemäße Fahrrad 1 umfasst in diesem Ausführungsbeispiel eine Rahmenstruktur 2, ein an der Rahmenstruktur 2 drehbar gelagertes Vorderrad 3, ein an der Rahmenstruktur 2 drehbar gelagertes Hinterrad 4, ein Antriebsmittel 5, bei welchem es sich in diesem Ausführungsbeispiel um einen mit dem Hinterrad 4 kräfteübertragend verbundenen Riemen handelt, eine erste Antriebseinheit 6 und eine zweite Antriebseinheit 8, wobei die Rahmenstruktur 2 ein Steuerohr 15, ein Sattelrohr 33 sowie ein Unterrohr 12 und ein Oberrohr 34, welches Unterrohr 12 und Oberrohr 34 das Steuerrohr 15 und das Sattelrohr 33 miteinander verbinden, aufweist.

Die erste Antriebseinheit 6 weist die erste Kurbelanordnung 7 auf, welche in diesem Ausführungsbeispiel als mit dem Antriebsmittel 5 verbundene Tretkurbelanordnung ausgebildet ist und mittels der Beinkraft eines Benutzers angetrieben werden kann. Die zweite Antriebseinheit 8 weist wiederum die zweite Kurbelanordnung 9 auf, welche in diesem Ausführungsbeispiel zwei Handkurbeln 9a umfasst und mittels der Armkraft des Benutzers angetrieben werden kann, wobei die beiden Handkurbeln 9a in diesem Ausführungsbeispiel jeweils an einem Ende einer an der Rahmenstruktur 2 drehbar gelagerten Lenkstange 11 angeordnet sind. Um das erfindungsgemäße Fahrrad 1 sowohl mittels Beinkraft als auch mittels Armkraft antreiben zu können, sind die beiden Antriebseinheiten 6,8 miteinander gekoppelt.

Fig. 4 stellt eine schematische seitliche Schnittdarstellung des erfindungsgemäßen Fahrrads 1 dar, aus welcher erkennbar ist, dass die zweite Antriebseinheit 8 einen Antriebsstrang 13 umfasst, welcher in diesem Ausführungsbeispiel eine erste innerhalb der Lenkstange 11 drehbar gelagerte Antriebswelle 17, eine zweite innerhalb des Steuerrohrs 15 drehbar gelagerte Antriebswelle 18 und eine dritte innerhalb des Unterrohrs 12 drehbar gelagerte Antriebswelle 19 aufweist. Der Antriebsstrang 13 dient der Übertragung der Kraft von der zweiten Kurbelanordnung 9 auf die erste Kurbelanordnung 7 und in weitere Folge auf das Antriebsmittel 5.

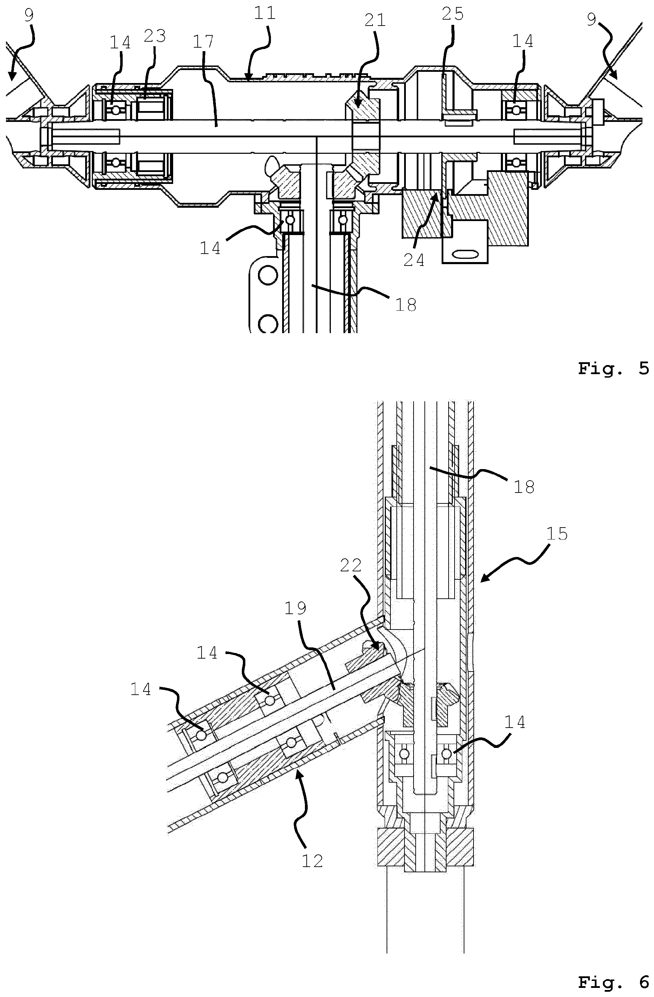

Aus Fig. 5, welche eine geschnittene Detailansicht der Lenkstange 11 und eines Teils der zweiten Kurbelanordnung 9 des erfindungsgemäßen Fahrrads 1 in schematischer Darstellung zeigt, ist erkennbar, dass die erste Antriebswelle 17 mit der zweiten Kurbelanordnung 9 kräfteübertragend verbunden ist. Hierfür weist die erste Antriebswelle 17 in diesem Ausführungsbeispiel an beiden Enden einen Vierkant auf, auf welchen die Kurbelanordnung 9 aufgesteckt und mit der ersten Antriebswelle 17 lösbar verbunden ist. Eine an der ersten Antriebswelle 17 angeordnete zweite Freilaufkupplung 23 dient dazu, eine Drehbewegung bzw. Kurbelbewegung der zweiten Kurbelanordnung 9 lediglich in eine Richtung, die sogenannte Drehrichtung, zuzulassen. Dadurch ist es nicht möglich die zweite Kurbelanordnung 9 entgegen dieser Drehrichtung zu bewegen, da die zweite Freilaufkupplung 23 sperrt - diese umfasst also eine Rücklaufsperre. Die zweite Freilaufkupplung 23 ist in diesem Ausführungsbeispiel als Rücklaufsperre mit Klemmkörperkupplung ausgeführt. Aufgrund der zweiten Freilaufkupplung 23 ist es für den Benutzer des erfindungsgemäßen Fahrrads 1 möglich durch leichten Zug an der zweiten Kurbelanordnung 9 gegen deren Drehrichtung diese zu stabilisieren und zu fixieren.

Des Weiteren ist aus Fig. 5 ersichtlich, dass das erfindungsgemäße Fahrrad 1 zusätzlich zum konventionellen Bremssystem ein Zusatzbremssystem 24 umfasst, welches abschnittsweise innerhalb der Lenkstange 11 angeordnet ist und auf die Drehbewegung der ersten Antriebswelle 17 wirkt, um in einer Bremsposition des Zusatzbremssystems 24 die zweite Kurbelanordnung 9 zu fixieren. In diesem Ausführungsbeispiel handelt es sich beim Zusatzbremssystem 24 um ein Scheibenbremssystem umfassend eine fest mit der ersten Antriebswelle 17 verbundenen Bremsscheibe 25 und einen an der Lenkstange 11 angeordneten und die Bremsscheibe 25 umgreifenden Bremsträger samt Bremssattel, in welchem die Bremsbeläge angeordnet sind. Des Weiteren umfasst das Scheibenbremssystem einen an der Lenkstange 11 angeordneten Bremshebel (nicht dargestellt), um das Scheibenbremssystem einfach betätigen zu können. Um den Bremshebel in einer Bremsposition nicht permanent drücken zu müssen, weist der Bremshebel ein Arretierungselement (nicht dargestellt) auf, mit welchem der Bremshebel in der Bremsposition lösbar fixiert werden kann.

Die erste Antriebswelle 17 ist mittels eines ersten Kegelradpaares 21 mit der zweiten Antriebswelle 18 kräfteübertragend verbunden und die zweite Antriebswelle 18 ist mittels eines zweiten Kegelradpaares 22 mit der dritten Antriebswelle 19 kräfteübertragend verbunden. Letzteres ist in Fig. 6 ersichtlich, welche eine geschnittene Detailansicht des Steuerrohrs 15 und eines (oberen) Teils des Unterrohrs 12 der Rahmenstruktur 2 des erfindungsgemäßen Fahrrads 1 in schematischer Darstellung zeigt.

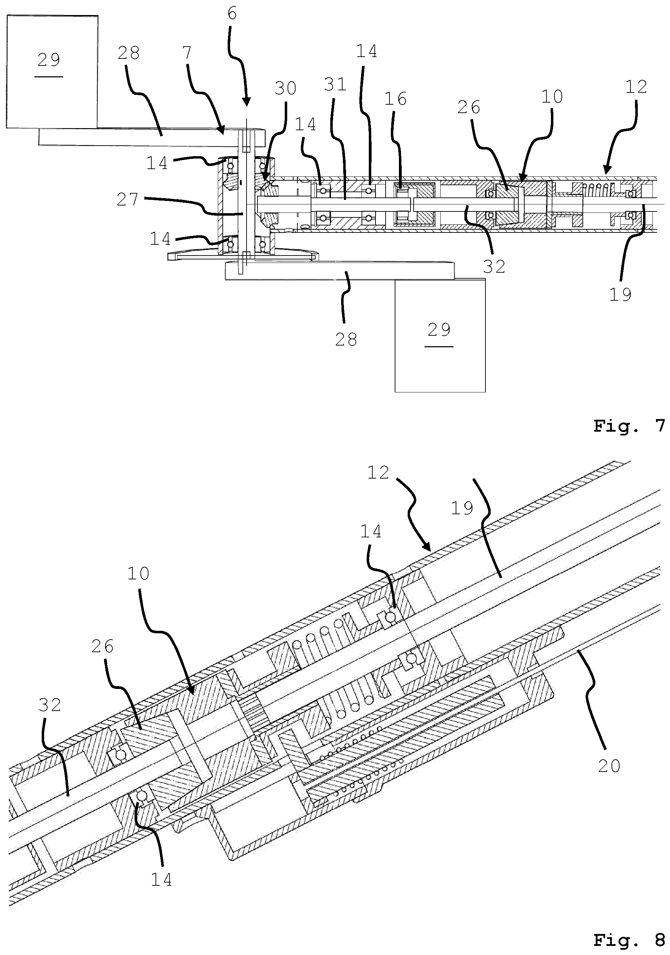

Fig. 7 stellt wiederum eine geschnittene Detailansicht eines anderen (unteren) Teils des Unterrohrs 12 der Rahmenstruktur 2 und der ersten Kurbelanordnung 7 in schematischer Darstellung dar. Aus dieser Figur ist ersichtlich, dass die erste Kurbelanordnung 7, welche - wie eingangs erwähnt - als Tretkurbelanordnung ausgeführt ist, eine Tretlagerwelle 27 und zwei an den Enden der Tretlagerwelle 27 angebrachte Tretkurbeln 28 samt Pedalen 29 aufweist. Über ein weiteres Kegelradpaar 30 ist die Tretlagerwelle 27 mit einem Ende einer der ersten Antriebseinheit 6 zugehörigen vierten Antriebswelle 31 kräfteübertragend verbunden. An einem anderen Ende der vierten Antriebswelle 31 ist eine erste Freilaufkupplung 16 angeordnet, welche dazu dient, die Kraftübertragung zwischen der ersten Antriebseinheit 6 und der zweiten Antriebseinheit 8 selbsttätig zu unterbrechen bzw. zu lösen, wenn die Drehzahl der ersten Antriebseinheit 6 größer ist als die Drehzahl der zweiten Antriebseinheit 8. In diesem Ausführungsbeispiel handelt es sich bei der ersten Freilaufkupplung 16 um eine Sperrklinken-Freilaufkupplung. Mit der ersten Freilaufkupplung 16 ist außerdem eine auch noch zur ersten Antriebseinheit 6 zugehörige fünfte Antriebswelle 32 verbunden. Sowohl die vierte Antriebswelle 31 als auch die erste Freilaufkupplung 16 und die fünfte Antriebswelle 32 sind innerhalb des Unterrohrs 12 angeordnet.

Sowohl aus Fig. 7 als auch aus Fig. 8, welche eine geschnittene Detailansicht des Unterrohrs 12 in schematischer Darstellung zeigt, ist ersichtlich, dass zwischen der ersten Antriebseinheit 6 und der zweiten Antriebseinheit 8 eine Kupplungseinheit 10 angeordnet ist, wobei diese einerseits mit der fünften Antriebswelle 32 der ersten Antriebseinheit 6 und mit der dritten Antriebswelle 19 der zweiten Antriebseinheit 8 verbunden ist. Die Kupplungseinheit 10 umfasst eine Kupplung 26, mittels welcher die erste Antriebseinheit 6 wahlweise von der zweiten Antriebseinheit 8 vollständig gelöst werden kann. In Fig. 8 ist die Kupplung 26 in einem geschlossenen Zustand dargestellt - d.h. die erste Antriebseinheit 6 ist mit der zweiten Antriebseinheit 8 kräfteübertragend verbunden. Des Weiteren umfasst die Kupplungseinheit 10 ein Betätigungselement (nicht dargestellt), mittels welchem die Kupplung 26 angesteuert werden kann. In diesem Ausführungsbeispiel ist das Betätigungselement an der Lenkstange angeordnet und mittels Seilzug 20 mit einem Hebel der Kupplung verbunden.

Sowohl die Tretlagerwelle 27 als auch die Antriebswellen 17,18,19,31,32 sind innerhalb der Rahmenstruktur 2 bzw. innerhalb der Lenkstange 11 bzw. innerhalb der Tretkurbel jeweils mittels Antriebswellenlagern 14 drehbar gelagert, bei welchen es sich um Kugellager handeln kann (vgl. Fig. 5 - Fig. 8).

Zusammenfassend lässt sich festhalten, dass es aufgrund der ersten Freilaufkupplung 16 und der zweiten Freilaufkupplung 23 also möglich ist, das erfindungsgemäße Fahrrad 1 unabhängig von den Straßenverhältnissen sicher zu lenken, da die Kurbelbewegung der zweiten Kurbelanordnung 9 der zweiten Antriebseinheit 8 - unabhängig von der Kurbelbewegung der ersten Kurbelanordnung 7 der ersten Antriebseinheit 6 - jederzeit unterbrochen werden kann, wodurch der Benutzer des erfindungsgemäßen Fahrrads 1 sichere und präzise Lenkbewegungen einleiten und durchführen kann.

Des Weiteren kann der Benutzer das erfindungsgemäße Fahrrad 1 dank der Kupplungseinheit 10 sicher und einfach rückwärts bewegen, wenn die erste Antriebseinheit 6 von der zweiten Antriebseinheit 8 mittels der Kupplung 26 gelöst ist.

Durch die zumindest abschnittsweise Anordnung der zweiten Antriebseinheit 8, insbesondere des Antriebsstrangs 13, der Kupplungseinheit 10 sowie der ersten Antriebseinheit 6 innerhalb der Rahmenstruktur 2 werden diese Einheiten vor Verschmutzung und Beschädigung geschützt, wodurch ein Wartungsintervall des erfindungsgemäßen Fahrrads 1 maximiert werden kann.

### BEZUGSZEICHENLISTE

- 1: Fahrrad
- 2: Rahmenstruktur
- 3: Vorderrad
- 4: Hinterrad
- 5: Antriebsmittel
- 6: erste Antriebseinheit
- 7: erste Kurbelanordnung
- 8: zweite Antriebseinheit
- 9: zweite Kurbelanordnung
- 9a: Handkurbel
- 10: Kupplungseinheit
- 11: Lenkstange
- 12: Unterrohr
- 13: Antriebsstrang
- 14: Antriebswellenlager
- 15: Steuerrohr
- 16: erste Freilaufkupplung
- 17: erste Antriebswelle
- 18: zweite Antriebswelle
- 19: dritte Antriebswelle
- 20: Seilzug
- 21: erstes Kegelradpaar
- 22: zweites Kegelradpaar
- 23: zweite Freilaufkupplung
- 24: Zusatzbremssystem
- 25: Bremsscheibe
- 26: Kupplung
- 27: Tretlagerwelle
- 28: Tretkurbeln
- 29: Pedale
- 30: weiteres Kegelradpaar
- 31: vierte Antriebswelle
- 32: fünfte Antriebswelle
- 33: Sattelrohr
- 34: Oberrohr

## Patentansprüche

1. Fahrrad (1) umfassend
- eine Rahmenstruktur (2),
- zumindest ein an der Rahmenstruktur (2) drehbar gelagertes Vorderrad (3),
- zumindest ein an der Rahmenstruktur (2) drehbar gelagertes Hinterrad (4),
- ein mit dem zumindest einen Hinterrad (4) kräfteübertragend verbundenes Antriebsmittel (5),
- eine erste Antriebseinheit (6) zum Antrieb des Antriebsmittels (5) umfassend eine erste drehbar an der Rahmenstruktur (2) gelagerte Kurbelanordnung (7),
- eine zweite Antriebseinheit (8) umfassend eine zweite Kurbelanordnung (9),
wobei die zweite Antriebseinheit (8) mit der ersten Antriebseinheit (6) gekoppelt ist,
wobei die erste Antriebseinheit (6) eine erste Freilaufkupplung (16) umfasst, wobei die Kopplung der zweiten Antriebseinheit (8) mit der ersten Antriebseinheit (6) mittels der ersten Freilaufkupplung (16) erfolgt,
**dadurch gekennzeichnet, dass**
die zweite Antriebseinheit (8) eine zweite Freilaufkupplung (23) umfasst, um eine Kurbelbewegung der Kurbelanordnung (9) nur in eine Richtung zu ermöglichen **und dass**
das Fahrrad (1) eine Kupplungseinheit (10) aufweist, um die erste Antriebseinheit (6) wahlweise von der zweiten Antriebseinheit (8) zu lösen.

2. Fahrrad (1) nach Anspruch 1, **dadurch gekennzeichnet, dass** die Kupplungseinheit (10) zumindest abschnittsweise innerhalb eines Unterrohrs (12) der Rahmenstruktur (2) angeordnet ist.

3. Fahrrad (1) nach einem der Ansprüche 1 bis 2, **dadurch gekennzeichnet, dass** die Kupplungseinheit (10) ein Betätigungselement (14) umfasst, mittels welches Betätigungselements (14) die erste Antriebseinheit (6) wahlweise von der zweiten Antriebseinheit (8) lösbar ist.

4. Fahrrad (1) nach einem der Ansprüche 1 bis 3, **dadurch gekennzeichnet, dass** die zweite Kurbelanordnung (9) zwei Handkurbeln (9a) umfasst, welche Handkurbeln (9a) an einer Lenkstange (11) angeordnet sind, wobei die Lenkstange (11) drehbar an der Rahmenstruktur (2) gelagert ist.

5. Fahrrad (1) nach Anspruch 4, **dadurch gekennzeichnet, dass** die zweite Antriebseinheit (8) einen Antriebsstrang (13) umfasst, welcher Antriebsstrang (13) einerseits kräfteübertragend mit der zweiten Kurbelanordnung (9) verbunden ist und andererseits kräfteübertragend mit der ersten Kurbelanordnung (7) verbunden ist,
wobei der Antriebsstrang (13)
- zumindest abschnittsweise innerhalb der Lenkstange (11),
- zumindest abschnittsweise innerhalb eines Steuerrohrs (15) der Rahmenstruktur (2) und
- zumindest abschnittsweise innerhalb eines Unterrohrs (12) der Rahmenstruktur (2) verlaufend angeordnet ist.

6. Fahrrad (1) nach Anspruch 1 und nach Anspruch 5, **dadurch gekennzeichnet, dass** der Antriebsstrang (13)
- eine erste innerhalb der Lenkstange (11) drehbar gelagerte Antriebswelle (17),
- eine zweite innerhalb des Steuerrohrs (15) der Rahmenstruktur (2) drehbar gelagerte Antriebswelle (18) und
- eine dritte innerhalb des Unterrohrs (12) der Rahmenstruktur (2) drehbar gelagerte Antriebswelle (19)
umfasst,
wobei
- die erste Antriebswelle (17) mit der zweiten Kurbelanordnung (9) kräfteübertragend verbunden ist,
- die erste Antriebswelle (17) mittels eines ersten Kegelradpaares (21) mit der zweiten Antriebswelle (18) kräfteübertragend verbunden ist,
- die zweite Antriebswelle (18) mittels eines zweiten Kegelradpaares (22) mit der dritten Antriebswelle (19) kräfteübertragend verbunden ist und
- die dritte Antriebswelle (19) mit einer Kupplung (26) der Kupplungseinheit (10) kräfteübertragend verbunden ist.

7. Fahrrad (1) nach einem der Ansprüche 1 bis 6, **dadurch gekennzeichnet, dass** das Fahrrad (1) ein Zusatzbremssystem (24) umfasst, welches Zusatzbremssystem (24) auf eine Bewegung der zweiten Antriebseinheit (8), insbesondere der zweiten Kurbelanordnung (9), wirkt.

8. Fahrrad (1) nach einem der Ansprüche 5 bis 6 und nach Anspruch 7, **dadurch gekennzeichnet, dass** das Zusatzbremssystem (24) abschnittsweise innerhalb der Lenkstange (11) angeordnet ist und auf die Drehbewegung der ersten Antriebswelle (17) wirkt, um in einer Bremsposition die zweite Kurbelanordnung (9) zu fixieren.

9. Fahrrad (1) nach einem der Ansprüche 7 bis 8, **dadurch gekennzeichnet, dass** es sich beim Zusatzbremssystem (24) um ein Scheibenbremssystem handelt.

10. Fahrrad (1) nach einem der Ansprüche 7 bis 9, **dadurch gekennzeichnet, dass** das Zusatzbremssystem zumindest einen Bremshebel (25) samt Arretierungselement umfasst, wobei das Arretierungselement eingerichtet ist, um den zumindest einen Bremshebel (25) in einer Bremsposition lösbar zu fixieren.

11. Fahrrad (1) nach einem der Ansprüche 1 bis 10, **dadurch gekennzeichnet, dass** das Antriebsmittel (5) eine Kette und/oder einen Riemen und/oder eine Kardanwelle umfasst.

12. Fahrrad (1) nach Anspruch 11, **dadurch gekennzeichnet, dass** das Antriebsmittel (5) zusätzlich einen Motor zum Antrieb des zumindest einen Hinterrads (4) umfasst.

13. Fahrrad (1) nach einem der Ansprüche 1 bis 12, **dadurch gekennzeichnet, dass** die erste Freilaufkupplung (16) zumindest abschnittsweise innerhalb eines Unterrohrs (12) der Rahmenstruktur (2) angeordnet ist.

## Claims

1. A bicycle (1) comprising:
- a frame structure (2);
- at least one front wheel (3) rotatably mounted on the frame structure (2);
- at least one rear wheel (4) rotatably mounted on the frame structure (2);
- a drive means (5) connected to the at least one rear wheel (4) in a force-transmitting manner;
- a first drive unit (6) for driving the drive means (5), comprising a first crank assembly (7) rotatably mounted on the frame structure (2);
- a second drive unit (8), comprising a second crank assembly (9),
with the second drive unit (8) being coupled to the first drive unit (6),
the first drive unit (6) comprising a first free-wheel clutch (16), the coupling between the second drive unit (8) and the first drive unit (6) taking place by means of the first free-wheel clutch (16),
**characterized in that**
the second drive unit (8) comprises a second free-wheel clutch (23) so as to enable a crank movement of the crank assembly (9) only in one direction,
**and that**
the bicycle (1) comprises a clutch unit (10) so as to selectively detach the first drive unit (6) from the second drive unit (8).

2. The bicycle (1) according to claim 1, **characterized in that** the coupling unit (10) is arranged at least sectionally within a down tube (12) of the frame structure (2).

3. The bicycle (1) according to any one of claims 1 to 2, **characterized in that** the coupling unit (10) comprises an actuating element (14), by means of which actuating element (14) the first drive unit (6) can be selectively detached from the second drive unit (8).

4. The bicycle (1) according to any one of claims 1 to 3, **characterized in that** the second crank assembly (9) comprises two hand cranks (9a), which hand cranks (9a) are arranged on a handlebar (11), the handlebar (11) being rotatably mounted on the frame structure (2).

5. The bicycle (1) according to claim 4, **characterized in that** the second drive unit (8) comprises a drive section (13), which drive section (13) is connected in a force-transmitting manner to the second crank assembly (9) on the one hand, and is connected in a force-transmitting manner to the first crank assembly (7) on the other hand,
the drive section (13) being arranged so as to extend
- at least sectionally within a handlebar (11);
- at least sectionally within a head tube (15) of the frame structure (2); and
- at least sectionally within a down tube (12) of the frame structure (2).

6. A bicycle (1) according to claim 1 and according to claim 5, **characterized in that** the drive section (13) comprises
- a first drive shaft (17) rotatably mounted within the handlebar (11);
- a second drive shaft (18) rotatably mounted within the head tube (15) of the frame structure (2); and
- a third drive shaft (19) rotatably mounted within the down tube (12) of the frame structure (2),
with
- the first drive shaft (17) being connected to the second crank assembly (9) in a force-transmitting manner;
- the first drive shaft (17) being connected to the second crank assembly (18) in a force-transmitting manner by means of a first bevel gear pair (21);
- the second drive shaft (18) being connected to the third crank assembly (19) in a force-transmitting manner by means of a second bevel gear pair (22); and
- the third drive shaft (19) being connected to a coupling (26) of the coupling unit (10) in a force-transmitting manner.

7. The bicycle (1) according to any one of claims 1 to 6, **characterized in that** the bicycle (1) comprises an additional brake system (24), which additional brake system (24) acts on a movement of the second drive unit (8), in particular the second crank assembly (9).

8. The bicycle (1) according to any one of claims 5 to 6 and according to claim 7, **characterized in that** the additional brake system (24) is arranged sectionally within the handlebar (11) and acts on the rotational movement of the first drive shaft (17) so as to fix the second crank assembly (9) in a braking position.

9. The bicycle (1) according to any one of claims 7 to 8, **characterized in that** the additional brake system (24) is a disk brake system.

10. The bicycle (1) according to any one of claims 7 to 9, **characterized in that** the additional brake system comprises at least one brake lever (25) including a locking element, the locking element being configured to releasably fix the at least one brake lever (25) in a braking position.

11. The bicycle (1) according to any one of claims 1 to 10, **characterized in that** the drive means (5) comprises a chain and/or a belt and/or a propeller shaft.

12. The bicycle (1) according to claim 11, **characterized in that** the drive means (5) additionally comprises a motor for driving the at least one rear wheel (4).

13. The bicycle (1) according to any one of claims 1 to 12, **characterized in that** the first free-wheel clutch (16) is arranged at least sectionally within a down tube (12) of the frame structure (2).

## Revendications

1. Vélo (1) comprenant :
- une structure de cadre (2) ;
- au moins une roue avant (3) montée en rotation sur la structure de cadre (2) ;
- au moins une roue arrière (4) montée en rotation sur la structure de cadre (2) ;
- un moyen d'entraînement (5) accouplé à l'au moins une roue arrière (4) de manière à transmettre une force ;
- une première unité d'entraînement (6) destinée à entraîner le moyen d'entraînement (5), comprenant un premier ensemble vilebrequin (7) monté en rotation sur la structure de cadre (2) ;
- une seconde unité d'entraînement (8), comprenant un deuxième ensemble vilebrequin (9),
avec la seconde unité d'entraînement (8) couplée à la première unité d'entraînement (6),
la première unité d'entraînement (6) comprenant un premier embrayage à roue libre (16), le couplage entre la seconde unité d'entraînement (8) et la première unité d'entraînement (6) ayant lieu au moyen du premier embrayage à roue libre (16),
**caractérisé en ce que**
la seconde unité d'embrayage (8) comprend un second embrayage à roue libre (23) de manière à permettre un mouvement de vilebrequin de l'ensemble vilebrequin (9) dans une seule direction,
**et en ce que**
le vélo (1) comprend une unité d'embrayage (10) de manière à détacher sélectivement la première unité d'entraînement (6) de la seconde unité d'entraînement (8).

2. Vélo (1) selon la revendication 1, **caractérisé en ce que** l'unité de couplage (10) est agencée au moins par sections au sein d'un tube oblique (12) de la structure de cadre (2).

3. Vélo (1) selon l'une quelconque des revendications 1 à 2, **caractérisé en ce que** l'unité de couplage (10) comprend un élément d'actionnement (14), élément d'actionnement (14) au moyen duquel la première unité d'entraînement (6) peut être détachée sélectivement de la seconde unité d'entraînement (8).

4. Vélo (1) selon l'une quelconque des revendications 1 à 3, **caractérisé en ce que** le deuxième ensemble vilebrequin (9) comprend deux manivelles (9a), lesquelles manivelles (9a) sont agencées sur une poignée de guidon (11), la poignée de guidon (11) étant montée en rotation sur la structure de cadre (2).

5. Vélo (1) selon la revendication 4, **caractérisé en ce que** la seconde unité d'entraînement (8) comprend une section d'entraînement (13), lequel section d'entraînement (13) est accouplé de manière à transmettre une force au deuxième ensemble vilebrequin (9) d'une part, et est accouplé de manière à transmettre une force au premier ensemble vilebrequin (7) d'autre part,
la section d'entraînement (13) étant agencée de manière à s'étendre
- au moins par sections au sein d'une poignée de guidon (11) ;
- au moins par sections au sein d'un tube de direction (15) de la structure de cadre (2) ; et
- au moins par sections au sein d'un tube oblique (12) de la structure de cadre (2).

6. Vélo (1) selon la revendication 1 et selon la revendication 5, **caractérisé en ce que** la section d'entraînement (13) comprend
- un premier arbre d'entraînement (17) monté en rotation au sein de la poignée de guidon (11) ;
- un deuxième arbre d'entraînement (18) monté en rotation au sein du tube de direction (15) de la structure de cadre (2) ; et
- un troisième arbre d'entraînement (19) monté en rotation au sein du tube oblique (12) de la structure de cadre (2),
avec
- le premier arbre d'entraînement (17) accouplé au deuxième ensemble vilebrequin (9) de manière à transmettre une force ;
- le premier arbre d'entraînement (17) accouplé au deuxième ensemble vilebrequin (18) de manière à transmettre une force au moyen d'une première paire d'engrenages coniques (21) ;
- le deuxième arbre d'entraînement (18) accouplé au troisième ensemble vilebrequin (19) de manière à transmettre une force au moyen d'une seconde paire d'engrenages coniques (22) ; et
- le troisième arbre d'entraînement (19) accouplé à un couplage (26) de l'unité de couplage (10) de manière à transmettre une force.

7. Vélo (1) selon l'une quelconque des revendications 1 à 6, **caractérisé en ce que** le vélo (1) comprend un système de freinage supplémentaire (24), lequel système de freinage (24) agit sur un mouvement de la seconde unité d'entraînement (8), en particulier le deuxième ensemble vilebrequin (9).

8. Vélo (1) selon l'une quelconque des revendications 5 à 6 et selon la revendication 7, **caractérisé en ce que** le système de freinage supplémentaire (24) est agencé par sections au sein de la poignée de guidon (11) et agit sur le mouvement de rotation du premier arbre d'entraînement (17) de manière à fixer le deuxième ensemble vilebrequin (9) en position de freinage.

9. Vélo (1) selon l'une quelconque des revendications 7 à 8, **caractérisé en ce que** le système de freinage supplémentaire (24) est un système de freinage à disque.

10. Vélo (1) selon l'une quelconque des revendications 7 à 9, **caractérisé en ce que** le système de freinage supplémentaire comprend au moins un levier de frein (25) incluant un élément de verrouillage, l'élément de verrouillage étant conçu pour fixer de manière libérable l'au moins un levier de frein (25) dans une position de freinage.

11. Vélo (1) selon l'une quelconque des revendications 1 à 10, **caractérisé en ce que** le moyen d'entraînement (5) comprend une chaîne et/ou une courroie et/ou un arbre de transmission.

12. Vélo (1) selon la revendication 11, **caractérisé en ce que** le moyen d'entraînement (5) comprend de plus un moteur destiné à entraîner l'au moins une roue arrière (4).

13. Vélo (1) selon l'une quelconque des revendications 1 à 12, **caractérisé en ce que** le premier embrayage à roue libre (16) est agencé au moins par sections au sein d'un tube oblique (12) de la structure de cadre (2).
